# EUROPÄISCHE PATENTSCHRIFT

(11) **EP 4 211 005 B1**
(45) Veröffentlichungstag und Bekanntmachung des Hinweises auf die Patenterteilung: **01.10.2025**
(21) Anmeldenummer: 21769953.7
(22) Anmeldetag: 30.08.2021
(51) Int. Cl.: B60R 22/46

(54) **GURTAUFROLLER**
BELT RETRACTOR
ENROULEUR DE CEINTURE

(30) Priorität: 07.09.2020 DE 102020211208
(43) Veröffentlichungstag der Anmeldung: 19.07.2023
(73) Patentinhaber: Autoliv Development AB, 447 83 Vårgårda (SE)
(72) Erfinder: SÖHNCHEN, Arndt, 22765 Hamburg (DE); JABUSCH, Ronald, 25336 Elmshorn (DE); GLAESSER, Antto-Christian, 25474 Hasloh (DE); CIRSTEA, Alexandru, 25335 Elmshorn (DE); EHLERS, Jens, 25358 Horst (DE)
(74) Vertreter: Müller Verweyen
(86) Internationale Anmeldenummer: PCT/EP2021/073824
(87) Internationale Veröffentlichungsnummer: WO 2022/049013

(56) Entgegenhaltungen:
- DE-A1- 102018 213 279
- DE-A1- 102018 213 282
- DE-A1- 19 959 956

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung des Gurtaufrollers an einer Sitzstruktur oder an einer Fahrzeugstruktur und ist dafür aus einem entsprechend dicken Stahlblech hergestellt, welches zu einem U-förmigen Rahmen gebogen ist. Ferner ist an der Gurtspule eine erste Blockiereinrichtung vorgesehen, mittels derer die Gurtspule bei einem Überschreiten einer vorbestimmten Gurtbandauszugsbeschleunigung und/oder Fahrzeugverzögerung in Auszugsrichtung blockierbar ist. Die erste Blockiereinrichtung umfasst als ein Grundbauteil eine erste Blockierklinke, welche die Gurtspule bei einer Aktivierung der ersten Blockiereinrichtung gegenüber dem Rahmen blockiert. Ferner umfasst die erste Blockiereinrichtung eine gegenüber der Gurtspule federbelastete mit der Gurtspule mitdrehende erste Steuerscheibe, welche eine Steuerkontur aufweist, an der die erste Blockierklinke mit einem Steuerstift anliegt. Weiterhin umfasst die erste Blockiereinrichtung eine oder zwei Sensoreinrichtungen, welche die erste Steuerscheibe bei einem Überschreiten der vorbestimmten Gurtbandauszugsbeschleunigung oder Fahrzeugverzögerung gegenüber der Gurtspule anhält und dadurch die Blockierbewegung der ersten Blockierklinke über die Steuerkontur und den daran anliegenden Steuerstift erzwingt. Die Seite der Gurtspule, an welcher die erste Blockiereinrichtung angeordnet ist, wird als Mechanikseite bezeichnet.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und verschiedenen weiteren Anbauteilen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen von Cabriolets der Fall war.

Ferner werden Gurtaufroller in modernen Sicherheitsgurteinrichtungen mit Elektromotoren versehen, welche die Gurtspule bei einer Aktivierung zum Beispiel zu einer reversiblen Gurtstraffung in Aufwickelrichtung antreiben. Der Elektromotor ist dabei ebenfalls an dem Rahmen befestigt und seitlich der Gurtspule mit einer parallel zu der Drehachse der Gurtspule ausgerichteten Antriebswelle angeordnet. Ferner ist es bekannt, zwischen der Gurtspule und dem Elektromotor ein Getriebe vorzusehen, durch welches die Drehzahl des Elektromotors in eine vorbestimmte Drehzahl der Gurtspule übersetzt wird. Durch die Verwendung des Getriebes wird es außerdem ermöglicht, einen möglichst kleinbauenden Elektromotor mit einer hohen Drehzahl zu verwenden. Insgesamt ergibt sich dadurch trotz der durch das Getriebe ermöglichten Verwendung des kleinbauenden Elektromotors ein Gurtaufroller mit einem vergrößerten Bauraumbedarf. Ein solcher Gurtaufroller ist z.B. aus der Druckschrift WO 03/0 99 619 A2 bekannt.

Sofern die Gurtspule mit unterschiedlichen Drehzahlen und Drehmomenten angetrieben werden soll, müssen weitere Getriebestufen vorgesehen werden, welche den Bauraumbedarf weiter vergrößern. Ein solcher Gurtaufroller ist z.B. aus der Druckschrift DE 199 27 731 C2 bekannt.

Da die an der Sitzstruktur der Fahrzeugsitze oder auch allgemein in sehr kleinen Fahrzeugen zur Verfügung stehenden Bauräume in ihrer Größe sehr begrenzt sind und aus Designgründen nicht beliebig vergrößert werden können, ist die Anordnung eines derartigen Gurtaufrollers am Fahrzeugsitz oder auch in einem kleinen Fahrzeug grundsätzlich problematisch.

Aus der Druckschrift DE 10 2018 213279 A1 ist ein lasttragendes Strukturteil für einen Fahrzeugsitz bekannt, welches einen Hohlraum aufweist, in dem ein Gurtaufroller platzsparend angeordnet werden kann. Der Gurtaufroller umfasst einen Rahmen, in dem eine Gurtspule drehbar gelagert ist, welche eine Mechanikseite mit einer ersten Blockiereinrichtung aufweist. Ferner ist ein Elektromotor vorgesehen, dessen Drehbewegung über ein Getriebe auf die Gurtspule übertragbar ist. Der Elektromotor und das Getriebe sind koaxial zu der Gurtspule angeordnet, wobei zur Übertragung der Drehbewegung von dem Getriebe auf die Gurtspule ein Torsionsstab vorgesehen ist.

Vor diesem Hintergrund liegt der Erfindung die Aufgabe zugrunde, einen schlanken Gurtaufroller mit einem Elektromotor und einem Getriebe zu schaffen, welcher auch in sehr schmalen Bauräumen angeordnet werden kann.

Erfindungsgemäß wird zur Lösung der Aufgabe ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass die erste Blockiereinrichtung eine erste drehbar gelagerte Steuerscheibe aufweist, und sich der Transferstab durch eine zentrale Öffnung der ersten Steuerscheibe erstreckt, wobei die erste Steuerscheibe auf dem Transferstab gelagert ist.

Die erste Steuerscheibe dient der Ansteuerung einer ersten Blockierklinke der ersten Blockiereinrichtung und bildet mit dem sich durch die zentrale Öffnung erstreckenden Transferstab einen kompakten Aufbau mit einer verbesserten Ausnutzung des durch den Transferstab geschaffenen Freiraumes zwischen dem Getriebe und der Gurtspule. Ferner ermöglicht der Transferstab eine Verbindung der Gurtspule mit dem Getriebe insbesondere über die Ebene, in welcher die erste Steuerscheibe angeordnet ist.

Der Transferstab übernimmt neben seiner eigentlichen Funktion der Verbindung der Gurtspule mit dem Getriebe zusätzlich eine zweite Funktion nämlich die Lagerung der ersten Steuerscheibe, so dass eine weitere bzw. eine bisher erforderliche anderweitige Lagerung der ersten Steuerscheibe entfällt.

Weiter wird vorgeschlagen, dass eine zweite Blockiereinrichtung vorgesehen ist, welche bei einer Aktivierung ein Teil des Getriebes fahrzeugfest blockiert und dadurch das Getriebe aus einem ersten Kraftübertragungsweg in einen zweiten Kraftübertragungsweg schaltet, und die zweite Blockiereinrichtung eine zweite drehbar gelagerte Steuerscheibe aufweist, und sich der Transferstab durch eine zentrale Öffnung der zweiten Steuerscheibe erstreckt. Die zweite Blockiereinrichtung dient der Schaltung des Getriebes und weist dazu eine zweite Steuerscheibe auf, welche nach demselben Prinzip wie die erste Steuerscheibe bei einer Aktivierung der zweiten Blockiereinrichtung eine zweite Blockierklinke zu einer Aussteuerbewegung in eine fahrzeugfeste Verzahnung zwingt und dadurch das Teil des Getriebes zur Schaltung des zweiten Kraftübertragungsweges blockiert. Die zweite und erste Steuerscheibe bilden damit zusammen mit dem Transferstab eine kompakte Baugruppe, wobei der durch den Transferstab überbrückte Freiraum in einer kompakten Bauweise sowohl zur Anordnung der ersten Steuerscheibe als auch zur Anordnung der zweiten Steuerscheibe genutzt wird.

Dabei kann die zweite Steuerscheibe bevorzugt ebenfalls auf dem Transferstab gelagert sein, woraus sich dieselben Vorteile wie bei der Lagerung der ersten Steuerscheibe ergeben.

Ferner können die erste und die zweite Steuerscheibe parallel benachbart und mit ihren Drehachsen koaxial zueinander angeordnet sein. Die zweite Steuerscheibe ist dabei bevorzugt parallel zu der ersten Steuerscheibe und mit ihrer Drehachse koaxial zu der Drehachse der ersten Steuerscheibe angeordnet, so dass die beiden Steuerscheiben eine kompakte Baugruppe mit einer gemeinsamen Drehachse bilden, durch welche sich der Transferstab erstreckt.

Diese parallele Anordnung der beiden Steuerscheiben kann dann in Ihrer kompakten Ausführung dadurch weiterentwickelt werden, indem die erste und die zweite Steuerscheibe durch einen gemeinsamen Blockierhebel blockierbar sind. Dadurch kann ein ansonsten erforderlicher zweiter Blockierhebel und die dazugehörige Aktivierungsmechanik für die zweite Blockiereinrichtung gespart werden. Dabei werden die erste Steuerscheibe und die zweite Steuerscheibe durch die Verwendung eines gemeinsamen Blockierhebel immer gleichzeitig gegenüber der Gurtspule bzw. gegenüber dem bei der Vorstraffung in dem ersten Kraftübertragungsweg drehenden Getriebe angehalten. Da die Blockierung der ersten Blockiereinrichtung jedoch nur dann ausgelöst wird, wenn die erste Steuerscheibe in Auszugsrichtung blockiert ist und die Gurtspule weiter in Auszugsrichtung dreht, die Gurtspule bei einer Straffung über dem Elektromotor und das Getriebe aber in Einzugsrichtung angetrieben wird, führt der Eingriff des gemeinsamen Blockierhebels in die erste Steuerscheibe beim Schalten des Getriebes nicht zu einer Aktivierung der ersten Blockiereinrichtung. Im umgekehrten Fall ist der Eingriff des gemeinsamen Blockierhebels in die zweite Steuerscheibe bei einem Überschreiten der vorbestimmten Werte der Gurtbandauszugsbeschleunigung und Fahrzeugverzögerung ebenfalls nicht von Nachteil, da die Gurtspule durch die Aktivierung der ersten Blockiereinrichtung ohne hin in Auszugsrichtung blockiert ist.

Weiter wird vorgeschlagen, dass die Gurtspule zweiteilig mit einem Gurtspulenkörper und einem durch die erste Blockiereinrichtung fahrzeugfest blockierbaren Profilkopf und einer zwischen dem Gurtspulenkörper und dem Profilkopf angeordneten Kraftbegrenzungseinrichtung ausgebildet ist, und der Transferstab mit seinem ersten Ende drehfest mit dem Profilkopf verbunden ist. Der Vorteil dieser Anordnung ist darin zu sehen, dass der über die erste Blockiereinrichtung fahrzeugfest blockierbare Profilkopf aufgrund der drehfesten Verbindung des Transferstabes einerseits und der zwischen dem Profilkopf und dem Gurtspulenkörper angeordneten Kraftbegrenzungseinrichtung eine konstruktive Schnittstelle zwischen dem Transferstab und der Kraftbegrenzungseinrichtung bildet, wodurch der Transferstab und die Kraftbegrenzungseinrichtung bei blockiertem Profilkopf automatisch voneinander entkoppelt werden, da die ausgeübte Zugkraft über den Profilkopf und die erste Blockiereinrichtung in die Fahrzeugstruktur eingeleitet werden.

Dabei wird weiter vorgeschlagen, dass die Kraftbegrenzungseinrichtung wenigstens einen koaxial zu der Drehachse der Gurtspule angeordneten Torsionsstab umfasst, welcher mit einem ersten Ende drehfest in einer an der Außenseite des Gurtspulenkörpers angeordneten Aufnahme und mit einem zweiten Ende drehfest in einer Aufnahme des Profilkopfes gehalten ist. Der Torsionsstab ist damit koaxial und in Reihe zu dem Gurtspulenkörper angeordnet und verlängert die Gurtspule damit zu einer länglichen schmale Baugruppe von dem das erste Teil der Gurtspule bildenden Gurtspulenkörper bis zu dem durch den Profilkopf gebildeten zweiten Teil der Gurtspule. Da der Transferstab drehfest mit dem Profilkopf verbunden ist und sowohl der Transferstab koaxial zu der Gurtspule und dem Gurtspulenkörper als auch der Torsionsstab koaxial zu dem Gurtspulenkörper angeordnet ist, ist folglich auch der Torsionsstab koaxial zu dem Transferstab angeordnet und bildet in Verbindung mit der Gurtspule eine weiter verlängerte schmale Baugruppe.

Weiter wird in diesem Fall vorgeschlagen, dass der Transferstab eine niedrigere Verformungsfestigkeit als die Kraftbegrenzungseinrichtung aufweist. Dadurch kann verhindert werden, dass die Kraftbegrenzungseinrichtung erstens bei einer Straffung des Sicherheitsgurtes voraktiviert wird, und dadurch sich zu Beginn eines kraftbegrenzten Gurtbandauszuges noch in dem Ausgangszustand befindet. Außerdem kann dadurch verhindert werden, dass die Straffleistung durch eine Aktivierung der Kraftbegrenzungseinrichtung verringert wird. Da der Transferstab zu Beginn der Kraftbegrenzung durch das Blockieren des Profilkopfes automatisch aus dem Kraftfluss genommen wird, ist dessen geringere Verformungsfestigkeit auch in dieser Hinsicht nicht von Nachteil. Dabei kann die geringere Verformungsfestigkeit z.B. durch die gezielte Wahl eines Werkstoffs mit einer geringeren Festigkeit erreicht werden.

Eine besonders bevorzugte Lösung liegt darin, dass der Transferstab aus Kunststoff ausgebildet ist, da der Transferstab dadurch sehr einfach mit den gewünschten Festigkeitswerten ausgelegt werden kann und außerdem im Spritzgussverfahren in einer Großserienfertigung kostengünstig herzustellen ist.

Die Erfindung wird im Folgenden anhand bevorzugter Ausführungsformen unter Bezugnahme auf die beigefügten Figuren erläutert. Dabei zeigt
- Fig. 1: ein erfindungsgemäßer Gurtaufroller in Explosionsdarstellung; und
- Fig. 2: ein erfindungsgemäßer Gurtaufroller in Schnittdarstellung.

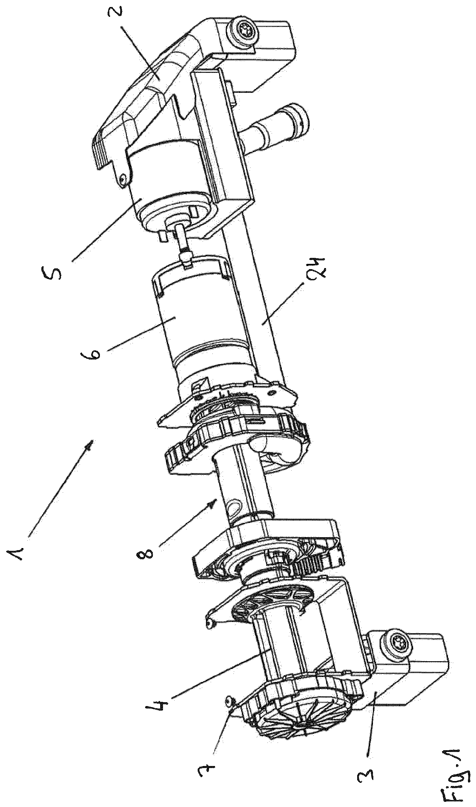

In der Figur 1 ist ein erfindungsgemäßer Gurtaufroller 1 mit zwei der Übersicht halber nur in Ausschnitten gezeigten Gehäusehälften 2 und 3 zu erkennen. Die vollständigen Gehäusehälften 2 und 3 kapseln den Gurtaufroller 1 zur Außenseite hin und dienen zusätzlich zur Befestigung des Gurtaufrollers 1 z.B. in einem schmalen Bauraum eines Fahrzeugsitzes. In dem Gurtaufroller 1 sind als Grundbaugruppen eine Gurtspule 4 mit einer Kraftbegrenzungseinrichtung 8, ein Elektromotor 5, ein Getriebe 6 und eine irreversible pyrotechnische Straffeinrichtung 24 vorgesehen.

Die Gurtspule 4 ist drehbar in einem Rahmen 7 gelagert, welcher seinerseits an wenigstens einer der Gehäusehälften 2 oder 3 befestigt oder zwischen den Gehäusehälften 2 und 3 klemmartig gehalten ist und sich dadurch drehfest an diesen abstützt.

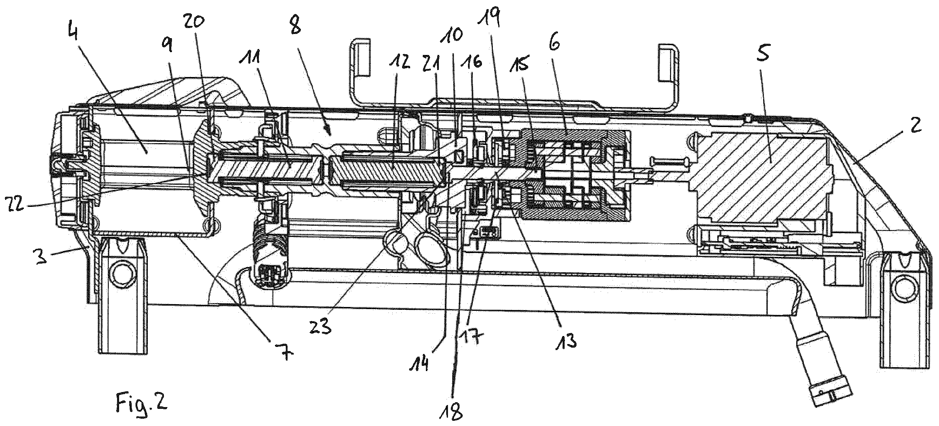

In der Figur 2 ist der Gurtaufroller im zusammengebauten Zustand in Schnittdarstellung zu erkennen. Die Gurtspule 4 ist zweiteilig mit einem Gurtspulenkörper 9 und einem fahrzeugfest über eine erste Blockiereinrichtung 18 blockierbaren Profilkopf 10 ausgebildet. Der Gurtspulenkörper 9 dient dem Aufwickeln eines nicht dargestellten Sicherheitsgurtes, während der Profilkopf 10 dem Blockieren der Gurtspule 4 dient und dazu über die erste Blockiereinrichtung 18 und eine zugehörige Sensoreinrichtung bei dem Überschreiten einer vorbestimmten Gurtbandauszugsbeschleunigung oder Fahrzeugverzögerung fahrzeugfest blockierbar ist. Der Gurtspulenkörper 9 und der Profilkopf 10 sind über eine Kraftbegrenzungseinrichtung 8 drehfest miteinander verbunden und bilden damit bis zu der Aktivierung der Kraftbegrenzungseinrichtung 8 in einem drehfesten Verbund die Gurtspule 4. Die Seite des Profilkopfes 10 bildet dabei die Mechanikseite der Gurtspule 4.

Ferner ist an der rechten Seite des Gurtaufrollers 1 der Elektromotor 5 zu erkennen, welcher sich an einer oder beider Gehäusehälften 2 und 3 drehfest abstützt. Die aus dem Elektromotor 5 herausgeführte Antriebswelle ist drehfest mit einem Antriebsrad des Getriebes 6 verbunden. Ferner ist ein Transferstab 13 vorgesehen welcher mit einem ersten Ende 14 drehfest mit dem Profilkopf 10 und mit einem zweiten Ende 15 drehfest mit einem Abtriebsrad des Getriebes 6 verbunden ist. Der Gurtspulenkörper 9, die Kraftbegrenzungseinrichtung 8, der Profilkopf 10, der Transferstab 13, das Getriebe 6 und schließlich der Elektromotor 5 sind in Reihe zueinander und koaxial zu der Drehachse der Gurtspule 4 in einer schmalen länglichen Anordnung zueinander angeordnet. Ferner ist die Kraftbegrenzungseinrichtung 8 durch zwei in Reihe angeordnete Torsionsstäbe 11 und 12 ausgebildet, welche unterschiedliche plastische Verformungsgrenzen aufweisen und z.B. durch eine Schalteinrichtung geschaltet werden können, wie sie in der DE 199 28 427 C2 beschrieben ist. Die Kraftbegrenzungseinrichtung 8 verlängert den Gurtspulenkörper 9 mit der koaxialen Reihenanordnung der Torsionsstäbe 11 und 12 bis zu dem Profilkopf 10 zu einer länglichen, schmalen Gurtspule 4.

Die erste Blockiereinrichtung 18 umfasst eine an dem Profilkopf 10 schwenkbar gelagerte erste Blockierklinke und eine erste Steuerscheibe 16 mit einer Steuerkontur, an welcher die erste Blockierklinke mit einem Steuerstift anliegt. Das Getriebe 6 umfasst eine zweite Blockiereinrichtung 19 mit einer schwenkbar gelagerten zweiten Blockierklinke und eine zweite Steuerscheibe 17 mit einer Steuerkontur, an welcher die zweite Blockierklinke mit einem Steuerstift anliegt.

Zur Aktivierung der ersten Blockiereinrichtung 18 wird die erste Steuerscheibe 16 gegenüber der Gurtspule 4 bzw. gegenüber dem Profilkopf 10 angehalten, und die erste Blockierklinke an dem Profilkopf 10 wird daraufhin zu einer Einsteuerbewegung in eine fahrzeugfeste Verzahnung des Gurtaufrollers 1 gezwungen, wodurch wiederum der Profilkopf 10 und bei einer nicht aktivierten Kraftbegrenzungseinrichtung 8 auch der Gurtspulenkörper 9 gegen eine weitere Drehung in Auszugsrichtung des auf dem Gurtspulenkörpers 9 aufgewickelten Sicherheitsgurtes blockiert sind. Zum Anhalten der ersten Steuerscheibe 16 kann eine Sensoreinrichtung in Form einer auf der ersten Steuerscheibe 16 schwenkbar gelagerten, federbelasteten Trägheitsmasse vorgesehen sein, welche bei einem Überschreiten einer vorbestimmten Auszugsbeschleunigung gegen die Federkraft ausgelenkt wird und dadurch in eine fahrzeugfeste Verzahnung einsteuert und die erste Steuerscheibe 16 nachfolgend gegenüber der Gurtspule 4 anhält und die Blockierbewegung der ersten Blockierklinke auslöst. Ferner kann eine fahrzeugbeschleunigungssensitive Sensoreinrichtung mit einem Blockierhebel vorgesehen sein, welcher bei einem Überschreiten einer vorbestimmten Fahrzeugverzögerung ausgelenkt wird und dadurch in eine Verzahnung der ersten Steuerscheibe 16 einsteuert und diese zur Auslösung der Blockierbewegung der ersten Blockierklinke gegenüber der Gurtspule 4 anhält. Die zweite Blockiereinrichtung 19 wird dadurch aktiviert, in dem die zweite Steuerscheibe 17 gegenüber dem Getriebe 6 angehalten wird, und dadurch die Blockierbewegung der zweiten Blockierklinke und die Schaltung des Getriebes 6 erzwingt. Sofern eine elektrisch ansteuerbare Sensoreinrichtung z.B. mit einem über einen Elektromagneten auslenkbaren Blockierhebel für die fahrzeugverzögerungssensitive Blockierung der ersten Blockiereinrichtung 16 vorgesehen ist, kann diese elektrisch ansteuerbare Sensoreinrichtung auch zur Blockierung und Ansteuerung der zweiten Blockiereinrichtung 19 genutzt werden, indem der Blockierhebel dann auch zur Blockierung der zweiten Steuerscheibe 17 genutzt wird. Die erste und zweite Steuerscheibe 16 und 17 werden dann über einen gemeinsamen Blockierhebel blockiert, wodurch der kompakte Aufbau des Gurtaufrollers 1 weiter verbessert wird, da die zweite Blockiereinrichtung 19 keine gesonderte Ansteuerung benötigt. Die zweite Blockiereinrichtung 19 dient hier der Schaltung des Getriebes 6, wobei das Getriebe 6 bei einer nicht aktivierten zweiten Blockiereinrichtung 19 als Baugruppe angetrieben wird, ohne dass eine Übersetzung der Antriebsdrehzahl des Elektromotors 5 stattfindet. Bei einer Aktivierung der zweiten Blockiereinrichtung 19 wird das Getriebe 6 geschaltet, indem das Gehäuse des Getriebes 6 oder ein anderes Teil des Getriebes 6 fahrzeugfest blockiert wird und die Drehbewegung des Elektromotors nur unter Aktvierung des Getriebes 6 und einer Drehbewegung der Zahnräder des Getriebes 6 zueinander mit einer entsprechenden Übersetzung von z. B. 1:36 oder 1:80 auf den Transferstab 13 und weiter auf die Gurtspule 4 übertragen werden kann.

Der Transferstab 13 bildet aufgrund seiner drehfest verbundenen Enden 14 und 15 eine drehfeste Verbindung der Gurtspule 4 mit dem Abtriebsrad des Getriebes 6. Dabei erstreckt er sich axial von der Mechanikseite der Gurtspule 4 also von dem Profilkopf 10 durch die Ebene, in welcher die erste Blockiereinrichtung 18 mit ihrer ersten Steuerscheibe 16 angeordnet ist und durch die zweite Steuerscheibe 17 der zweiten Blockiereinrichtung 19 hindurch bis zu dem Getriebe 6. Dabei sind die erste Steuerscheibe 16 und die zweite Steuerscheibe 17 bevorzugt über eine jeweils eine zentrale Öffnung auf dem Transferstab 13 gelagert und parallel zueinander angeordnet. Der Transferstab 13 ermöglicht damit einen kompakten Aufbau des Gurtaufrollers 1 mit den beiden Blockiereinrichtungen 18 und 19 in einer länglichen, schmalen Bauweise.

Der Transferstab 13 überträgt die Antriebsdrehbewegung des Elektromotors 5 auf die Gurtspule 4 in dem ersten Kraftübertragungsweg, wenn das Getriebe 6 als Baugruppe angetrieben wird in dem Übersetzungsverhältnis von 1:1. Bei einer Aktvierung der zweiten Blockiereinrichtung 19 überträgt der Transferstab 13 dann die bereits in dem Getriebe 6 in dem Übersetzungsverhältnis von 1:36 oder 1:80 übersetzte Drehbewegung auf die Gurtspule 4. Dabei ermöglicht der Transferstab 13 die Übertragung der Drehbewegung von dem Getriebe 6 durch die erste Blockiereinrichtung 18 und die zweite Blockiereinrichtung 19 auf die Gurtspule 4 in einer kompakten Bauweise. Anders ausgedrückt wird durch den Transferstab 13 ein Zwischenraum zur Anordnung der ersten und zweiten Blockiereinrichtung 18 und 19 insbesondere mit ihren Steuerscheiben 16 und 17 geschaffen. In jedem Fall ergänzen sich der Transferstab 13 und die beiden Steuerscheiben 16 und 17 zu einer kompakten Bauweise mit einer optimierten Bauraumausnutzung in dem Gehäuse des Gurtaufrollers 1. Dabei sind die beiden Steuerscheiben 16 und 17 bevorzugt parallel zueinander angeordnet und senkrecht zu der Längsachse des Transferstabes 13 angeordnet, so dass sich eine kompakte Bauweise ergibt. Außerdem können die beiden Steuerscheiben 16 und 17 dadurch zusätzlich axial an einem zwischen ihnen angeordneten Axiallager auf dem Transferstab 13 gelagert sein.

Der Transferstab 13 weist bevorzugt eine niedrigere plastische Verformungsgrenze als das durch die Kraftbegrenzungseinrichtung 8 definierte Kraftbegrenzungsniveau auf, so dass die Kraftbegrenzungseinrichtung 8 erstens während der Straffung des Sicherheitsgurtes oder während der Ausführung einer Komfortfunktion nicht ungewollt aktiviert wird und sich zu Beginn ihrer Aktivierung praktisch noch in ihrem Ausgangszustand befindet. Zweitens wird die Antriebsdrehbewegung des Elektromotors 5 dadurch nicht durch eine mögliche Aktivierung der Kraftbegrenzungseinrichtung unbeabsichtigt reduziert, also die Straffleistung z.B. nicht verringert. In dem vorliegenden Fall der Verwendung von Torsionsstäben 11 und 12 heißt dies, dass die plastische Verformungsgrenze des Transferstabes 13 bewusst niedriger ist als die plastischen Verformungsgrenzen der Torsionss5täbe 11 und 12. Dies kann z.B. dadurch verwirklicht sein, indem der Transferstab 13 aus Kunststoff mit einer entsprechend niedrigeren Festigung als die aus Stahl gefertigten Torsionsstäbe 11 und 12 hergestellt ist. Außerdem ist Kunststoff ein sehr günstiger und in einer Großserienfertigung z.B. in einem Spritzgussverfahren zu verarbeitender Werkstoff und weist für die Übertragung der Straffleistung und der Drehbewegung der Komfortfunktion trotzdem eine ausreichende Festigkeit auf. Da der Transferstab 13 mit seinem ersten Ende 14 mit dem Profilkopf 10 verbunden ist, wird er bei einer Aktivierung der ersten Blockiereinrichtung 18 automatisch aus dem Kraftfluss ausgekoppelt und wird dadurch nachfolgend nicht mehr belastet.

Der Transferstab 13 ist dabei an seinem zweiten Ende 15 zu einem Profil z.B. in Form einer Verzahnung ausgebildet, mit dem er in einer formkorrespondierenden Aufnahme des Abtriebsrades des Getriebes 6 drehfest festgelegt ist. Je nach dem zu überbrückenden Abstand zwischen dem Profilkopf 10 bzw. der Gurtspule 4 und dem Getriebe 6 kann dann ein Transferstab 13 entsprechender Länge verwendet werden, ohne dass dabei das Getriebe 6 und insbesondere dessen Abtriebsrad und die Gurtspule 4 bzw. der Profilkopf 10 konstruktiv angepasst werden müssen.

## Patentansprüche

1. Gurtaufroller (1) mit
- einer in einem fahrzeugfest befestigbaren Rahmen (7) drehbar gelagerten Gurtspule (4), auf welcher ein Sicherheitsgurt aufwickelbar ist, und
- einer ersten an einer Mechanikseite der Gurtspule (4) angeordneten Blockiereinrichtung (18), welche die Gurtspule (4) bei einem Überschreiten einer vorbestimmten Gurtbandauszugsbeschleunigung und/oder Fahrzeugverzögerung und einer dadurch erzwungenen Aktivierung in Auszugsrichtung des Sicherheitsgurtes blockiert, und
- einem Elektromotor (5) zum Antrieb der Gurtspule (4) zu einer Drehbewegung, und
- einem die Drehbewegung von dem Elektromotor (5) auf die Gurtspule (4) übertragenden Getriebe (6), wobei
- der Elektromotor (5) und das Getriebe (6) koaxial zu der Drehachse der Gurtspule (4) und in Reihe zu der Gurtspule (4) angeordnet sind, und
- ein koaxial zu der Drehachse der Gurtspule (4) und in Reihe zu der Gurtspule (4) angeordneter Transferstab (13) vorgesehen ist, welcher mit einem ersten Ende (14) an der Mechanikseite der Gurtspule (4) drehfest mit der Gurtspule (4) und mit einem zweiten Ende (15) über ein Profil drehfest mit einem Abtriebsrad des Getriebes (6) verbunden ist und sich durch die erste Blockiereinrichtung (18) erstreckt, **dadurch gekennzeichnet, dass**
- die erste Blockiereinrichtung (18) eine erste drehbar gelagerte Steuerscheibe (16) aufweist, und sich der Transferstab (13) durch eine zentrale Öffnung der ersten Steuerscheibe (16) erstreckt, wobei
- die erste Steuerscheibe (16) auf dem Transferstab (13) gelagert ist.

2. Gurtaufroller (1) nach Anspruch 1, **dadurch gekennzeichnet, dass**
- eine zweite Blockiereinrichtung (19) vorgesehen ist, welche bei einer Aktivierung ein Teil des Getriebes (6) fahrzeugfest blockiert und dadurch das Getriebe (6) aus einem ersten Kraftübertragungsweg in einen zweiten Kraftübertragungsweg schaltet, und
- die zweite Blockiereinrichtung (19) eine zweite drehbar gelagerte Steuerscheibe (17) aufweist, und
- sich der Transferstab (13) durch eine zentrale Öffnung der zweiten Steuerscheibe (17) erstreckt.

3. Gurtaufroller (1) nach Anspruch 2, **dadurch gekennzeichnet, dass**, die zweite Steuerscheibe (17) auf dem Transferstab (13) gelagert ist.

4. Gurtaufroller (1) nach einem der Ansprüche 2 oder 3,
**dadurch gekennzeichnet, dass**
- die erste und die zweite Steuerscheibe (16,17) parallel benachbart und mit ihren Drehachsen koaxial zueinander angeordnet sind.

5. Gurtaufroller (1) nach Anspruch 4, **dadurch gekennzeichnet, dass**
- die erste und die zweite Steuerscheibe (16,17) durch einen gemeinsamen Blockierhebel blockierbar sind.

6. Gurtaufroller (1) nach einem der vorangegangenen Ansprüche, **dadurch gekennzeichnet, dass**
- die Gurtspule (4) zweiteilig mit einem Gurtspulenkörper (9) und einem durch die erste Blockiereinrichtung (18) fahrzeugfest blockierbaren Profilkopf (10) und einer zwischen dem Gurtspulenkörper (9) und dem Profilkopf (10) angeordneten Kraftbegrenzungseinrichtung (8) ausgebildet ist, und
- der Transferstab (13) mit seinem ersten Ende (14) drehfest mit dem Profilkopf (10) verbunden ist.

7. Gurtaufroller (1) nach Anspruch 6, **dadurch gekennzeichnet, dass**
- die Kraftbegrenzungseinrichtung (8) wenigstens einen koaxial zu der Drehachse der Gurtspule (4) angeordneten Torsionsstab (11,12) umfasst, welcher mit einem ersten Ende (20) drehfest in einer an der Außenseite des Gurtspulenkörpers (9) angeordneten Aufnahme (22) und mit einem zweiten Ende (21) drehfest in einer Aufnahme (23) des Profilkopfes (10) gehalten ist.

8. Gurtaufroller (1) nach einem der Ansprüche 6 oder 7,
**dadurch gekennzeichnet, dass**
- der Transferstab (13) eine niedrigere Verformungsfestigkeit als die Kraftbegrenzungseinrichtung (8) aufweist.

9. Gurtaufroller (1) nach einem der vorangegangenen Ansprüche, **dadurch gekennzeichnet, dass**
- der Transferstab (13) aus Kunststoff ausgebildet ist.

## Claims

1. Belt retractor (1) comprising
- a belt reel (4) onto which a seat belt can be wound and which is rotatably mounted in a frame (7) which can be fixed to the vehicle, and
- a first locking device (18) which is arranged at a mechanism end of the belt reel (4) and locks the belt reel (4) when a predetermined belt pull-out acceleration and/or vehicle deceleration is exceeded and an activation in the pull-out direction of the seat belt is thereby triggered, and
- an electric motor (5) for driving the belt reel (4) into a rotational movement, and
- a gear mechanism (6) which transmits the rotational movement from the electric motor (5) to the belt reel (4), wherein
- the electric motor (5) and the gear mechanism (6) are arranged coaxially with the axis of rotation of the belt reel (4) and in series with the belt reel (4), and
- a transfer rod (13) is provided which is arranged coaxially with the axis of rotation of the belt reel (4) and in series with the belt reel (4), and is connected to the belt reel (4) in a rotationally fixed manner by a first end (14) at the mechanism end of the belt reel (4), and is connected to an output gear of the gear mechanism (6) in a rotationally fixed manner by a second end (15), via a profile, and extends through the first locking device (18), **characterized in that**
- the first locking device (18) comprises a first rotatably mounted control disk (16), and the transfer rod (13) extends through a central opening in the first control disk (16), wherein
- the first control disk (16) is mounted on the transfer rod (13).

2. Belt retractor (1) according to claim 1, **characterized in that**
- a second locking device (19) is provided which, upon activation, locks a part of the gear mechanism (6) in a manner fixed with respect to the vehicle, and thereby shifts the gear mechanism (6) from a first force transmission path into a second force transmission path, and
- the second locking device (19) comprises a second rotatably mounted control disk (17), and
- the transfer rod (13) extends through a central opening in the second control disk (17).

3. Belt retractor (1) according to claim 2, **characterized in that** the second control disk (17) is mounted on the transfer rod (13).

4. Belt retractor (1) according to either claim 2 or claim 3,
**characterized in that**
- the first and the second control disk (16, 17) are arranged in parallel next to one another and with their rotational axes coaxial with one another.

5. Belt retractor (1) according to claim 4, **characterized in that**
- the first and the second control disk (16, 17) can be locked by a common locking lever.

6. Belt retractor (1) according to any of the preceding claims,
**characterized in that**
- the belt reel (4) is formed in two parts, comprising a belt reel body (9) and a profile head (10) which can be locked in a manner fixed with respect to the vehicle by the first locking device (18), and a force-limiting device (8) arranged between the belt reel body (9) and the profile head (10), and
- the transfer rod (13) is connected by its first end (14) to the profile head (10) in a rotationally fixed manner.

7. Belt retractor (1) according to claim 6, **characterized in that**
- the force-limiting device (8) comprises at least one torsion bar (11, 12) arranged coaxially with the rotational axis of the belt reel (4), a first end (20) of which torsion bar is rotationally fixed in a receptacle (22) arranged on the outer side of the belt reel body (9), and a second end (21) of which torsion bar is rotationally fixed in a receptacle (23) of the profile head (10).

8. Belt retractor (1) according to either claim 6 or claim 7,
**characterized in that**
- the transfer rod (13) has a lower deformation resistance than the force-limiting device (8).

9. Belt retractor (1) according to any of the preceding claims,
**characterized in that**
- the transfer rod (13) is made of plastics material.

## Revendications

1. Enrouleur de ceinture (1) comportant
- une bobine de ceinture (4) montée rotative dans un cadre (7) pouvant être fixé de manière solidaire au véhicule, sur laquelle une ceinture de sécurité peut être enroulée, et
- un premier dispositif de blocage (18) disposé sur un côté mécanique de la bobine de ceinture (4), lequel dispositif de blocage bloque la bobine de ceinture (4) en cas de dépassement d'une accélération d'extension de sangle de ceinture prédéterminée et/ou d'une décélération de véhicule et d'activation ainsi forcée dans un sens d'extension de la ceinture de sécurité, et
- un moteur électrique (5) permettant l'entraînement de la bobine de ceinture (4) dans un mouvement de rotation, et
- une transmission (6) transmettant le mouvement de rotation du moteur électrique (5) à la bobine de ceinture (4), dans lequel
- le moteur électrique (5) et la transmission (6) sont disposés de manière coaxiale par rapport à l'axe de rotation de la bobine de ceinture (4) et en série par rapport à la bobine de ceinture (4), et
- une barre de transfert (13) disposée de manière coaxiale par rapport à l'axe de rotation de la bobine de ceinture (4) et en série par rapport à la bobine de ceinture (4) est prévue, laquelle est reliée par une première extrémité (14) sur le côté mécanique de la bobine de ceinture (4) de manière solidaire en rotation à la bobine de ceinture (4) et par une seconde extrémité (15), par l'intermédiaire d'un profilé, de manière solidaire en rotation à une roue d'entraînement de la transmission (6), et laquelle s'étend à travers le premier dispositif de blocage (18), **caractérisé en ce que**
- le premier dispositif de blocage (18) présente un premier plateau-came (16) monté rotatif et la barre de transfert (13) s'étend à travers une ouverture centrale du premier plateau-came (16), dans lequel
- le premier plateau-came (16) est monté sur la barre de transfert (13).

2. Enrouleur de ceinture (1) selon la revendication 1, **caractérisé en ce que**
- un second dispositif de blocage (19) est prévu, lequel, en cas d'activation, bloque de manière solidaire au véhicule une partie de la transmission (6) et commute ainsi la transmission (6) d'une première voie de transmission de force à une seconde voie de transmission de force, et
- le second dispositif de blocage (19) présente un second plateau-came (17) monté rotatif, et
- la barre de transfert (13) s'étend à travers une ouverture centrale du second plateau-came (17).

3. Enrouleur de ceinture (1) selon la revendication 2, **caractérisé en ce que** le second plateau-came (17) est monté sur la barre de transfert (13).

4. Enrouleur de ceinture (1) selon l'une des revendications 2 ou 3,
**caractérisé en ce que**
- le premier et le second plateau-came (16, 17) sont disposés à proximité l'un de l'autre et avec leurs axes de rotation coaxiaux l'un par rapport à l'autre.

5. Enrouleur de ceinture (1) selon la revendication 4, **caractérisé en ce que**
- le premier et le second plateau-came (16, 17) peuvent être bloqués par un levier de blocage commun.

6. Enrouleur de ceinture (1) selon l'une des revendications précédentes, **caractérisé en ce que**
- la bobine de ceinture (4) est réalisée en deux parties avec un corps de bobine de ceinture (9) et une tête de profilé (10) pouvant être bloquée de manière solidaire au véhicule par le premier dispositif de blocage (18) et un dispositif de limitation de force (8) disposé entre le corps de bobine de ceinture (9) et la tête de profilé (10), et
- la barre de transfert (13) est reliée de manière solidaire en rotation par sa première extrémité (14) à la tête de profilé (10).

7. Enrouleur de ceinture (1) selon la revendication 6, **caractérisé en ce que**
- le dispositif de limitation de force (8) comprend au moins une bielle de torsion (11, 12) disposée de manière coaxiale par rapport à l'axe de rotation de la bobine de ceinture (4), laquelle bielle de torsion est maintenue solidaire en rotation par une première extrémité (20) dans un logement (22) disposé sur le côté extérieur du corps de bobine de ceinture (9) et de manière solidaire en rotation par une seconde extrémité (21) dans un logement (23) de la tête de profilé (10).

8. Enrouleur de ceinture (1) selon l'une des revendications 6 ou 7, **caractérisé en ce que**
- la barre de transfert (13) présente une résistance à une déformation inférieure à celle du dispositif de limitation de force (8).

9. Enrouleur de ceinture (1) selon l'une des revendications précédentes, **caractérisé en ce que**
- la barre de transfert (13) est réalisée en matière plastique.
